# EUROPEAN PATENT APPLICATION

(11) **EP 4 060 514 A1**
(43) Date of publication of application: **21.09.2022**
(21) Application number: 20897975.7
(22) Date of filing: 17.11.2020
(51) Int. Cl.: G06F 16/27

(54) **DISTRIBUTED DATABASE SYSTEM AND DATA DISASTER BACKUP DRILLING METHOD**

(30) Priority: 11.12.2019 CN 201911267233
(71) Applicant: ZTE Corporation, Shenzhen, Guangdong 518057 (CN)
(72) Inventor: ZHANG, Peng, Shenzhen, Guangdong 518057 (CN); YAN, Ke, Shenzhen, Guangdong 518057 (CN); DING, Yan, Shenzhen, Guangdong 518057 (CN); LIU, Zhiwen, Shenzhen, Guangdong 518057 (CN)
(74) Representative: Zoli, Filippo
(86) International application number: PCT/CN2020/129428
(87) International publication number: WO 2021/115043

(57) **Abstract**

A distributed database system and a data disaster backup drilling method, wherein the distributed database comprises a local computer room (110) and a remote computer room (120), wherein the local computer room (110) comprises a local management node (111) and a local database cluster (112), the remote computer room (120) comprises a remote management node (121), a remote drilling database cluster (123) and a remote synchronization database cluster (122); wherein the local database cluster (112) and the remote synchronization database cluster (122) are both connected with the local management node (111); the remote drilling database cluster (123) is used for: establishing a first connection with the remote management node (121); and receiving a test service sent by a service layer.

## Description

### CROSS-REFERENCE TO RELATED APPLICATION

The present application is based on and claims the priority of Chinese patent application No. 201911267233.7 filed on December 11, 2019, the disclosure of which is incorporated herein by reference in its entirety.

### TECHNICAL FIELD

The present disclosure relates to the technical field of databases, and in particular to a distributed database system and a data disaster backup exercise method.

### BACKGROUND

For a long time, the financial-grade distributed database adopts a multi-site and multi-center networking architecture to ensure the stability and reliability of its service and the high availability of its components. When a local computer room and a computer room in the same region fail or are abnormal at the same time, the service will be required to migrate to an offsite location. For example, the master computer room of a bank financial institution is located in location A, and the standby computer room is located in location B. Under normal circumstances, the computer room in location B synchronizes service data of the computer room in location A to back up the service data of the master computer room. In case of any failure or abnormality in the computer room in location A, it is required that the computer room in location B can take over the service of the master computer room in location A smoothly. Under the disaster backup environment, the operation capability and service processing capability of the offsite computer room are the necessary factors to ensure the stable service of the database. The simulation exercise of the offsite computer room is to verify the operation capability and service processing capability of the offsite computer room in the disaster backup environment. At present, in terms of disaster backup exercises, the industry lacks systematic, universal and convenient disaster backup exercise schemes.

### SUMMARY

The following is an overview of the subject matter described in detail herein. This summary is not intended to limit the scope of protection of the appended claims.

In accordance with an aspect of the present disclosure, an embodiment provides a distributed database, a data disaster backup exercise method and device, and a computer-readable storage medium, which can test the operation capability and service processing capability of an offsite computer room in a simulated disaster backup environment, thus achieving the purpose of data disaster backup simulation exercise.

In accordance with another aspect of the present disclosure, an embodiment provides a distributed database system, including a local management node, a local database cluster, an offsite management node, an offsite exercise database cluster and an offsite synchronization database cluster, where: the local database cluster and the offsite synchronization database cluster are both connected with the local management node; and the offsite exercise database cluster is configured to: establish a first connection with the offsite management node; and receive a test service sent by a service layer, where the test service is configured to perform a simulation exercise on the offsite management node and the offsite exercise database cluster.

In accordance with yet another aspect of the present disclosure, an embodiment provides a data disaster backup exercise method, including: establishing, by an offsite management node, a first connection with an offsite exercise database cluster to receive through the offsite exercise database cluster a test service sent by a service layer to perform a simulation exercise.

In accordance with yet another aspect of the present disclosure, an embodiment provides a data disaster backup exercise method, including: establishing, by an offsite exercise database cluster, a first connection with an offsite management node; and receiving, by the offsite exercise database cluster, a test service sent by a service layer, where the test service is configured to perform a simulation exercise on the offsite management node and the offsite exercise database cluster.

In accordance with yet another aspect of the present disclosure, an embodiment provides a device, including: a memory configured to store a program; and a processor configured to execute the program stored in the memory, where when the processor executes the program stored in the memory, the processor is configured to execute either of the data disaster backup exercise methods described above.

In accordance with yet another aspect of the present disclosure, an embodiment provides a computer-readable storage medium storing computer-executable instructions that are configured to execute either of the data disaster backup exercise methods described above.

Additional features and advantages of the present disclosure will be set forth in the subsequent description, and in part will become apparent from the description, or may be learned by practice of the present disclosure. The purposes and other advantages of the present disclosure can be realized and obtained by structures specified in the description, the claims and the accompanying drawings.

### BRIEF DESCRIPTION OF DRAWINGS

The accompanying drawings are used to provide a further understanding of the technical schemes of the present disclosure and constitute a part of the description. The accompanying drawings are used to explain the technical schemes of the present disclosure together with the embodiments of the present disclosure, and do not constitute a restriction on the technical schemes of the present disclosure.
Fig. 1 is a schematic diagram of the architecture of a distributed database system provided by an embodiment of the present disclosure;
Fig. 2 is a schematic diagram of the architecture of another distributed database system provided by an embodiment of the present disclosure;
Fig. 3 is a flowchart of a data disaster backup exercise method provided by an embodiment of the present disclosure;
Fig. 4 is a flowchart of another data disaster backup exercise method provided by an embodiment of the present disclosure; and
Fig. 5 is a schematic diagram of the structure of a device provided by an embodiment of the present disclosure.

### DETAILED DESCRIPTION

In order to make the objectives, technical schemes and advantages of the present disclosure more apparent, the present disclosure is further described in detail in conjunction with the accompanying drawings and embodiments. It should be understood that the specific embodiments described here are only intended to explain the present disclosure and are not intended to limit the present disclosure.

It should be known that, in the description of the embodiments of the present disclosure, "a plurality of (or multiple)" means two or more; "greater than", "less than", "over", etc. are to be understood to exclude the given figure; and "above", "below", "within", etc. are understood to include the given figure. If "first" and "second", etc. are referred to, it is only for the purpose of distinguishing technical features, and shall not be understood as indicating or implying relative importance or implying the number of the indicated technical features or implying the sequence of the indicated technical features.

The embodiments of the present disclosure provide a distributed database, a data disaster backup exercise method and device, and a computer-readable storage medium, which can test the operation capability and service processing capability of an offsite computer room in a simulated disaster backup environment, thus achieving the purpose of data disaster backup simulation exercise.

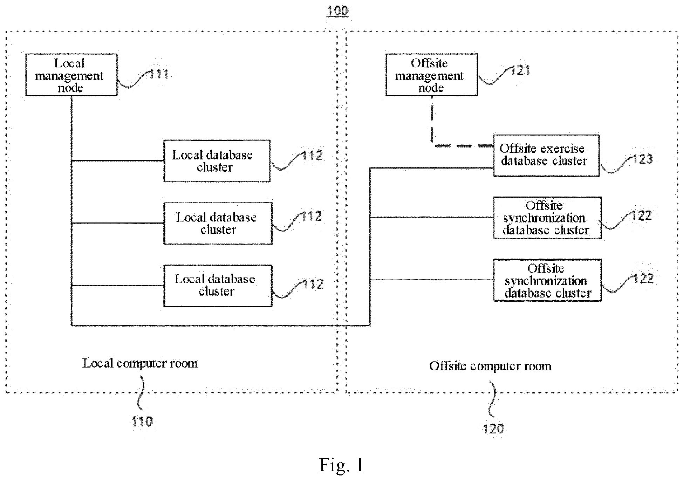

Fig. 1 illustrates a schematic diagram of the architecture of a distributed database system provided by an embodiment of the present disclosure. As shown in Fig. 1, the distributed database system 100 includes a local management node 111, local database clusters 112, an offsite management node 121, an offsite exercise database cluster 123, and offsite synchronization database clusters 122, where the local management node 111 and the local database clusters 112 are located in the local computer room 110, and the offsite management node 121, the offsite exercise database cluster 123, and the offsite synchronization database clusters 122 are located in the offsite computer room 120.

It should be understood that the distributed database system 100 according to the embodiment of the present disclosure may be provided with multiple database clusters in the local computer room 110 and the offsite computer room 120, respectively. In an implementation, as shown in Fig. 1, both the local computer room 110 and the offsite computer room 120 adopt a one-master-two-standby architecture, that is, the local computer room 110 and the offsite computer room 120 each include three database clusters, one of which serves as a master base to process services from the service layer, and the other two database clusters serve as slave bases to synchronously store service data to ensure data security.

It should also be understood that each database cluster includes multiple databases. In practical applications, each database may be used to concurrently execute a different process decomposed from a transaction, thus improving the computational efficiency or storage capability of the entire system.

The local management node 111 and the offsite management node 121 are responsible for managing the database clusters to which they belong. The management here mainly includes meta data management, transaction management, and operation and maintenance management.

In an embodiment of the present disclosure, the local database clusters 112 and the offsite synchronization database clusters 122 are all connected with the local management node 111, and the offsite synchronization database clusters 122 replicate the service data of the local database clusters 112 under the management process of the local management node 111 to achieve the synchronization of the data of the local database clusters 112 by the offsite synchronization database clusters 122.

In an exercise situation, the offsite exercise database cluster 123 of the embodiment of the present disclosure establishes a first connection with the offsite management node 121, and receives a test service sent by a service layer, where the test service may be configured to perform a simulation exercise on the offsite management node and the offsite exercise database cluster. In a non-exercise situation, it establishes a second connection with the local management node 111, and replicates the service data of the local database clusters 112 under the management process of the local management node 111 to achieve synchronization of the data of the local database clusters 112 together with the offsite synchronization database clusters 122.

In an implementation, under normal circumstances, the offsite exercise database cluster 123 and the offsite synchronization database clusters 122 are all connected with the local management node 111 to synchronize the data of the local database clusters 112. Upon an exercise task being triggered, the second connection between the offsite exercise database cluster 123 and the local management node 111 is disconnected, forming a network isolation from the local computer room 110, and constructing an isolated island environment, thus achieving the purpose of simulating the disaster backup environment. Upon the second connection between the offsite exercise database cluster 123 and the local management node 111 being disconnected, the offsite exercise database cluster 123 establishes the first connection with the offsite management node 121 to receive the test service sent by the service layer to perform a simulation exercise.

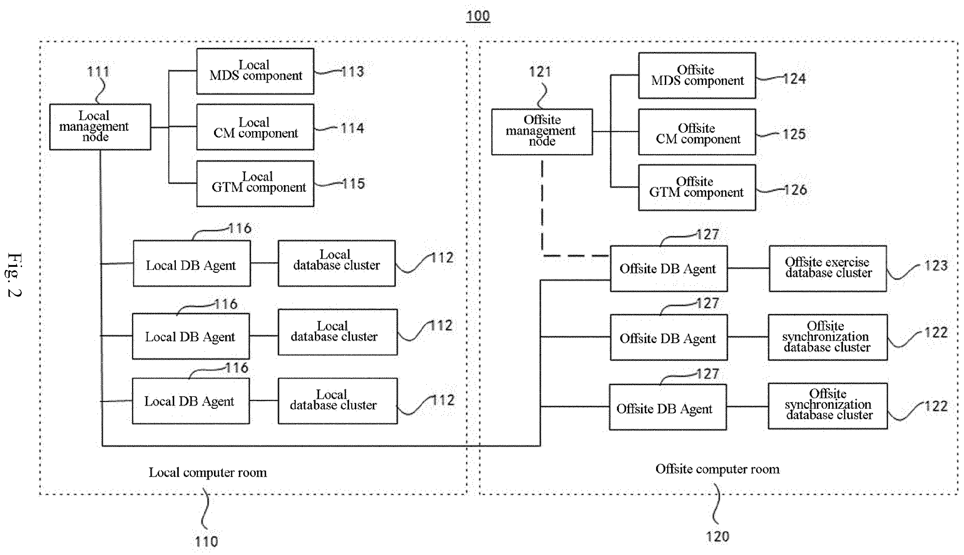

Alternatively, in the schematic diagram of the architecture of another distributed database system 100 as shown in Fig. 2, the local management node 111 is configured with a local meta data service (MDS) component 113, a local Cloudera Manager (CM) component 114, and a local Global Transaction Manager (GTM) component 115. The offsite management node 121 is configured with an offsite MDS component 124, an offsite CM component 125 and an offsite GTM component 126. The local database cluster 112 is configured with a local Data Base Agent (DB Agent) 116, and the offsite synchronization database cluster 122 and the offsite exercise database cluster 123 are respectively configured with an offsite DB Agent component 127.

The MDS components are responsible for storing a series of meta data in the database. The CM components are configured to manage the database clusters to which they belong, including the master-slave switchover operation of the database. The GTM components are responsible for managing the transactions of database clusters and ensuring the consistency of distributed data. The DB Agent components are database monitoring agents, which are connected with the management nodes and are responsible for executing the cluster management process of the management nodes.

According to the technical scheme of the embodiment of the present disclosure, the offsite exercise database cluster 123 and the offsite synchronization database clusters 122 are deployed in the offsite computer room 120. The offsite exercise database cluster 123 is configured to receive a test service sent by a service layer under the simulated disaster backup environment. Through this test service, a simulation exercise is performed on the offsite management node 121 and the offsite exercise database cluster 123 to test the operation capability and service processing capability of the offsite computer room 120 in the simulated environment. During the simulation exercise, the offsite synchronization database clusters 122 still synchronize the data of the local computer room 110 normally to ensure the data security. The exercise scheme proposed by the embodiment of the present disclosure has universality and can be applied to all multi-site and multi-center environments, and the reliability and high availability of the offsite computer room can be systematically evaluated by adopting this exercise scheme.

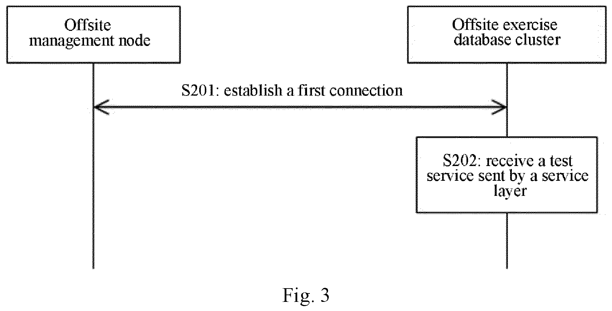

Fig. 3 illustrates a flowchart of a data disaster backup exercise method provided by an embodiment of the present disclosure. The method may be applied to the distributed database 100 shown in Fig. 1 and Fig. 2. As shown in Fig. 3, the method includes, but is not limited to, the following steps.

At step S201, an offsite management node establishes a first connection with an offsite exercise database cluster.

In an embodiment of the present disclosure, upon an exercise task being triggered, the offsite management node establishes the first connection with the offsite exercise database cluster to achieve the purpose of simulating the disaster backup environment.

At step S202, the offsite exercise database cluster receives a test service sent by a service layer.

In an implementation, the test service may be manually triggered by the administrator, and sent to the offsite exercise database cluster through the service layer, and the offsite exercise database cluster executes this test service under the management process of the offsite management node, thereby implementing the simulation exercise of the offsite management node and the offsite exercise database cluster.

The result of the simulation exercise may evaluate the operation capability and service processing capability of the offsite computer room by checking whether the snapshots at any time during the exercise meet strong consistency.

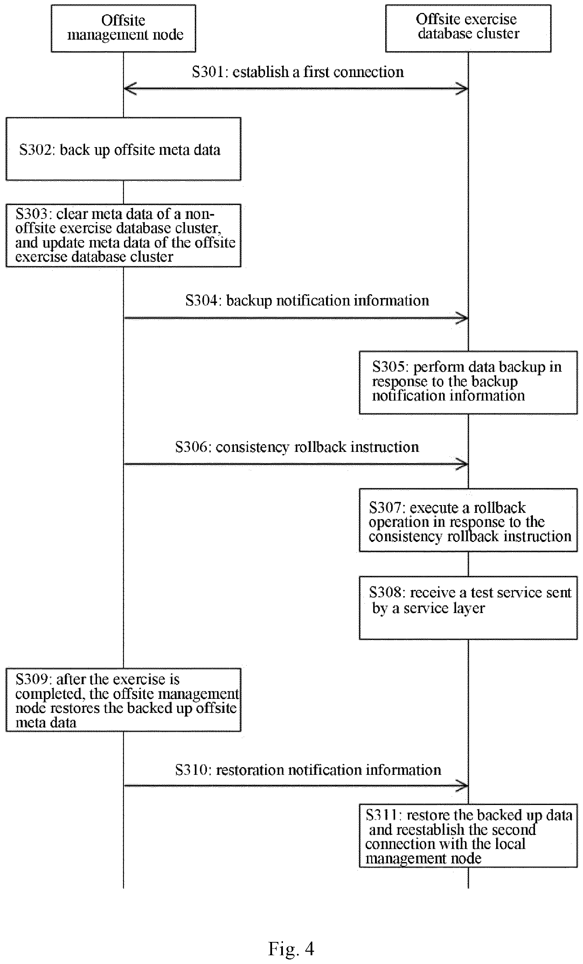

Fig. 4 illustrates a flowchart of another data disaster backup exercise method provided by an embodiment of the present disclosure. As shown in Fig. 4, the method includes, but is not limited to, the following steps.

At step S301, an offsite management node establishes a first connection with an offsite exercise database cluster.

In an embodiment of the present disclosure, in a non-exercise situation, the offsite exercise database cluster establishes a second connection with the local management node, and replicates the service data of the local database cluster under the management process of the local management node to synchronize the data of the local database cluster together with the offsite synchronization database cluster.

Upon an exercise task being triggered, the second connection between the offsite exercise database cluster and the local management node is disconnected, forming a network isolation from the local computer room. In this case, the offsite management node and the offsite exercise database cluster establish the first connection with each other, constructing an isolated island environment, thus achieving the purpose of simulating the disaster backup environment.

In an implementation, in response to the second connection between the offsite exercise database cluster and the local management node being disconnected, the offsite management node may establish the first connection with the offsite exercise database cluster by modifying the DNS configuration.

It should be understood that, when performing an exercise through the offsite exercise database cluster, it should be ensured that the master base of the offsite computer room does not exist in the offsite exercise database cluster, so as not to affect the normal service processing.

In response to the master base not existing in the offsite exercise database cluster, the offsite management node may directly execute step S301 to establish the first connection with the offsite exercise database cluster.

In response to the master base existing in the offsite exercise database cluster, a new master base should be selected from the offsite synchronization database cluster, and a master-slave switchover operation should be performed between the master base existing in the offsite exercise database cluster and the new master base selected from the offsite synchronization database cluster, and after the switchover succeeds, the offsite management node executes step S301 to establish the first connection with the offsite exercise database cluster.

The following is a description of an implementation of the master-slave switchover operation.

The offsite MDS component parses and transparently transmits a master-base switchover message to the offsite CM component for processing. After receiving the master-base switchover message transparently transmitted by the offsite MDS component, in order to prevent the original master base or other local slave bases from connecting to the new master base and generating a rollback operation, the offsite CM component should check the binary log (binlog) information to ensure that the Global Transaction ID (GTID) value of the selected new master base is the same as the GTID value of the original master base before performing the switchover, and after the switchover succeeds, the offsite CM component returns a switchover success message to the offsite MDS component to notify the offsite MDS component to modify the meta data.

At step S302, the offsite management node backs up the offsite meta data.

The offsite management node backs up the offsite meta data, so that, after the exercise is completed, the backed up offsite meta data can be restored to the environment before the exercise.

In some embodiments, the offsite management node backs up the offsite meta data, which may be implemented through the offsite MDS component, and backs up the meta data of the offsite management node to the offsite MDS component.

At step S303, the offsite management node clears the meta data of a non-offsite exercise database cluster and updates the meta data of the offsite exercise database cluster.

For example, the meta data of the non-offsite exercise database cluster may be deleted by calling the meta data clearing script, and the master-slave information of the meta data of the offsite exercise database cluster may be modified. In some examples, step S303 may be implemented by the offsite MDS component under the offsite management node.

At step S304, the offsite management node sends backup notification information to the offsite exercise database cluster.

After establishing the first connection with the offsite exercise database cluster, the offsite management node sends the backup notification information to the offsite exercise database cluster to notify the offsite exercise database cluster to back up the service data.

At step S305, the offsite exercise database cluster receives the backup notification information sent by the offsite management node, and performs data backup in response to the backup notification information.

After receiving the backup notification information sent by the offsite management node, the offsite exercise database cluster backs up the data stored in the offsite exercise database cluster in response to the backup notification information.

In some examples, the backup of the service data stored in the offsite exercise database cluster in step S305 may be implemented by the offsite DB Agent component.

At step S306, the offsite management node sends a consistency rollback instruction to the offsite exercise database cluster to cause databases of the offsite exercise database cluster to execute a rollback operation.

According to the characteristics of distributed data transaction processing, a complete transaction is divided into multiple operations that are assigned to multiple databases for processing. Taking the transaction of transferring money from person one to person two as an example, an operation of deducting person one's account balance may be performed by database A and an operation of increasing person two's account balance may be performed by database B. The results of processing this transaction by database A and database B may be successful, failed or uncertain. Supposing that database A and database B receive an exercise task in the process of processing this transaction, and, at this time, one database has successfully processed this transaction, while the other database has failed or is still in the process of processing and it is thus uncertain whether the operation will be successful or not, if the exercise is to be performed immediately at this moment, the result of the exercise may be deviated due to inconsistent data.

Alternatively, in order to ensure the data consistency in the offsite exercise database cluster during the exercise, before the exercise, the offsite management node may send a consistency rollback instruction to the offsite exercise database cluster to cause databases of the offsite database cluster to perform a rollback operation so that the databases of the offsite exercise database cluster satisfy the requirement of data consistency.

At step S307, the offsite exercise database cluster receives the consistency rollback instruction sent by the offsite management node; and databases of the offsite exercise database cluster execute a rollback operation in response to the consistency rollback instruction.

In an implementation, in a distributed database system, each transaction has a GTID assigned by the GTM component, so the consistency moment of the databases can be acquired by checking the GTIDs of the executed transactions recorded in the database logs. In response to the consistency moment being acquired, the databases of the offsite exercise database cluster execute together, in response to the consistency rollback instruction, an operation of rolling back to the consistency moment, thus achieving the purpose of ensuring the data consistency of the databases during the exercise.

At step S308, the offsite exercise database cluster receives a test service sent by a service layer.

The test service may be manually triggered by the administrator, and sent to the offsite exercise database cluster through the service layer, and the offsite exercise database cluster executes this test service under the management process of the offsite management node, thereby implementing the simulation exercise of the offsite management node and the offsite exercise database cluster.

The result of the simulation exercise may evaluate the operation capability and service processing capability of the offsite computer room by checking whether the snapshots at any time during the exercise meet strong consistency.

In an implementation, the offsite exercise database cluster receives the test service sent by the offsite management node and processes the test service to achieve the purpose of simulation exercise. The result of the simulation exercise may evaluate the operation capability and service processing capability of the offsite computer room by checking whether the snapshots at any time during the exercise meet strong consistency.

At step S309, after the exercise is completed, the offsite management node restores the backed up offsite meta data.

The offsite management node restores the backed up offsite meta data, so that the data of the offsite management node can be restored to the moment of the last backup before the exercise starts.

At step S310, the offsite management node sends restoration notification information to the offsite exercise database cluster.

The offsite management node sends the restoration notification information to the offsite exercise database cluster to notify the offsite exercise database cluster to restore to the environment before the exercise.

At step S311, the offsite exercise database cluster receives the restoration notification information sent by the offsite management node; and restores the backed up data in response to the restoration notification information, and reestablishes the second connection with the local management node.

After receiving the restoration notification information sent by the offsite management node, the offsite exercise database cluster restores the data backed up before the exercise, reestablishes the second connection with the local management node, and restores the master-standby database relationship with the offsite synchronization database cluster, thus restoring to the environment before the exercise.

It should be understood that the various embodiments of the methods provided by the embodiments of the present disclosure may be arbitrarily combined to achieve different technical effects.

Based on the technical schemes provided by the embodiments of the present disclosure, the disaster backup environment can be conveniently simulated, and the construction of the disaster backup environment and the restoration of the environment before the exercise can both be done by scripts by one click. It is also possible to intuitively evaluate the service processing capability of the offsite computer room and the running state of the components in the disaster backup environment. At the same time, the normal service of the offsite synchronization database cluster and the simulated service of the offsite exercise database cluster are performed in parallel during the simulation exercise and do not affect each other. The exercise scheme proposed by the research of the present disclosure has universality and can be applied to all multi-site and multi-center environments. By adopting this exercise scheme, the reliability and high availability of distributed databases can be systematically verified.

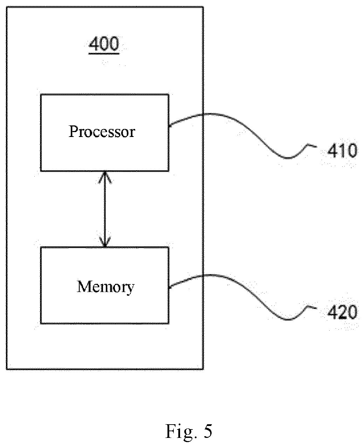

Fig. 5 illustrates a device 400 provided by an embodiment of the present disclosure. As shown in Fig. 5, the device 400 includes, but is not limited to: a memory 420 configured to store a program; and a processor 410 configured to execute the program stored in the memory 420, where when the processor 410 executes the program stored in the memory 420, the processor 410 is configured to execute the data disaster backup exercise methods described above.

The processor 410 and the memory 420 may be connected by a bus or other means.

As a non-transitory computer-readable storage medium, the memory 420 may be used to store a non-transitory software program and a non-transitory computer-executable program, such as the data disaster backup exercise methods described in the embodiments of the present disclosure. The processor 410 executes the non-transitory software program and instructions stored in the memory 420, thereby implementing the above data disaster backup exercise methods.

The memory 420 may include a program storage area and a data storage area, where the program storage area may store the operating system and an application program required by at least one function; and the data storage area may store and execute the above data disaster backup exercise methods. In addition, the memory 420 may include a high-speed random access memory, and may also include a non-transitory memory, such as at least one magnetic disk memory device, a flash memory device, or other non-transitory solid-state memory devices. In some implementations, the memory 420 may optionally include memories remotely located with respect to the processor 410, and these remote memories may be connected to the device via a network. Examples of the above network include, but are not limited to, the Internet, an intranet, a local area network, a mobile communication network, and a combination thereof.

The non-transitory software program and instructions required to implement the above data disaster backup exercise methods are stored in the memory 420, and when executed by one or more processors 410, the above data disaster backup exercise methods are executed, for example, method step S201 described in Fig. 3, method steps S201 and S202 described in Fig. 3, method steps S301 to S303, S304, S306, S309 and S310 described in Fig. 4, and method steps S301, S305, S307, S308 and S311 described in Fig. 4.

The embodiments of the present disclosure further provide a computer-readable storage medium storing computer-executable instructions that are configured to execute the data disaster backup exercise methods described above.

In an embodiment, the computer-readable storage medium stores computer-executable instructions that are executed by one or more control processors 410, for example, by one processor 410 in the above device 400, to cause the above one or more processors 410 to execute the above data disaster backup exercise methods, for example, to execute method step S201 described in Fig. 3, method steps S201 and S202 described in Fig. 3, method steps S301 to S303, S304, S306, S309 and S310 described in Fig. 4, and method steps S301, S305, S307, S308 and S311 described in Fig. 4.

The device embodiments described above are merely schematic, where the units illustrated as separate components may or may not be physically separated, i.e., may be located in one place or may also be distributed to multiple network units. Some or all of the modules can be selected according to actual needs to achieve the purpose of this embodiment.

According to the technical scheme of the embodiments of the present disclosure, an offsite exercise database cluster and an offsite synchronization database cluster are deployed in an offsite computer room, where the offsite exercise database cluster is configured to receive a test service sent by a service layer in a simulated disaster backup environment. Through this test service, a simulation exercise can be performed on an offsite management node and the offsite exercise database cluster, so as to test the operation capability and service processing capability of the offsite computer room in the simulated disaster backup environment. During the simulation exercise, the offsite synchronization database cluster still synchronizes the data of the local computer room normally to ensure the data security. The exercise scheme proposed by the present disclosure has universality and can be applied to all multi-site and multi-center environments, and the reliability and high availability of the offsite computer room can be systematically evaluated by adopting this exercise scheme.

It can be understood by those having ordinary skills in the art that all or some of the steps of the methods and systems disclosed above can be implemented as software, firmware, hardware, and appropriate combinations thereof. Some or all of the physical components may be implemented as software executed by a processor, such as a central processing unit, a digital signal processor or a microprocessor, or as hardware, or as an integrated circuit, such as an application specific integrated circuit. Such software can be distributed on computer-readable media, which can include computer storage media (or non-transitory media) and communication media (or transitory media). As well known to those having ordinary skills in the art, the term computer storage medium includes volatile and nonvolatile, removable and non-removable media implemented in any method or technology for storing information, such as computer-readable instructions, data structures, program modules or other data. A computer storage medium includes but is not limited to RAM, ROM, EEPROM, flash memory or other memory technologies, CD-ROM, digital versatile disk (DVD) or other optical disk storage, cassettes, magnetic tapes, magnetic disk storage or other magnetic storage devices, or any other medium that can be configured to store desired information and can be accessed by a computer. Furthermore, it is well known to those having ordinary skills in the art that communication media typically contain computer-readable instructions, data structures, program modules or other data in a modulated data signal such as a carrier wave or other transmission mechanism, and can include any information delivery media.

The above is a detailed description of several embodiments of the present disclosure, but the present disclosure is not limited to the above embodiments. Those having ordinary skills in the art can also make various equivalent modifications or replacements without departing from the principles of the present disclosure, and these equivalent modifications or replacements are all included in the scope defined by the appended claims of the present disclosure.

## Claims

1. A distributed database system, comprising:
a local management node;
a local database cluster connected with the local management node;
an offsite management node;
an offsite exercise database cluster configured to establish a first connection with the offsite management node, and receive a test service sent by a service layer, wherein the test service is configured to perform a simulation exercise on the offsite management node and the offsite exercise database cluster; and
an offsite synchronization database cluster connected with the local management node.

2. The system of claim 1, wherein the offsite exercise database cluster is further configured to:
establish a second connection with the local management node in a non-exercise situation.

3. The system of claim 1, wherein the offsite exercise database cluster is further configured to:
receive, when establishing the first connection with the offsite management node, backup notification information sent by the offsite management node; and
back up offsite exercise database cluster data in response to the backup notification information.

4. The system of claim 3, wherein the offsite exercise database cluster is further configured to:
receive restoration notification information sent by the offsite management node after the exercise is completed; and
restore the backed up offsite exercise database cluster data in response to the restoration notification information.

5. The system of claim 1, wherein the offsite exercise database cluster is further configured to:
receive a consistency rollback instruction sent by the offsite management node; and
execute, by databases of the offsite exercise database cluster, a rollback operation in response to the consistency rollback instruction.

6. A data disaster backup exercise method, comprising:
establishing, by an offsite management node, a first connection with an offsite exercise database cluster to receive through the offsite exercise database cluster a test service sent by a service layer to perform a simulation exercise.

7. The method of claim 6, wherein establishing, by the offsite management node, the first connection with the offsite exercise database cluster comprises:
establishing, by the offsite management node, the first connection with the offsite exercise database cluster in response to a second connection between the offsite exercise database cluster and the local management node being disconnected.

8. The method of claim 6 or claim 7, wherein establishing, by the offsite management node, the first connection with the offsite exercise database cluster comprises one of:
in response to a master base existing in the offsite exercise database cluster, selecting a new master base from the offsite synchronization database cluster, performing a switchover operation between the master base and the new master base, and establishing, by the offsite management node, the first connection with the offsite exercise database cluster after the switchover succeeds; and
in response to the master base not existing in the offsite exercise database cluster, establishing, by the offsite management node, the first connection with the offsite exercise database cluster.

9. The method of claim 6, further comprising:
backing up, by the offsite management node, offsite meta data in response to the offsite management node establishing the first connection with the offsite exercise database cluster; and
after the exercise is completed, restoring, by the offsite management node, the backed up offsite meta data, and sending restoration notification information to the offsite exercise database cluster.

10. The method of claim 9, further comprising:
in response to the offsite management node completing backup of the offsite meta data, clearing, by the management node, meta data of a non-offsite exercise database cluster, and updating meta data of the offsite exercise database cluster.

11. The method of claim 6, further comprising:
in response to the offsite management node establishing the first connection with the offsite exercise database cluster, sending, by the offsite management node, backup notification information to the offsite exercise database cluster.

12. The method of claim 6, further comprising:
in response to the offsite management node establishing the first connection with the offsite exercise database cluster, sending, by the offsite management node, a consistency rollback instruction to the offsite exercise database cluster to cause databases of the offsite exercise database cluster to execute a rollback operation.

13. A data disaster backup exercise method, comprising:
establishing, by an offsite exercise database cluster, a first connection with an offsite management node; and
receiving, by the offsite exercise database cluster, a test service sent by a service layer, wherein the test service is configured to perform a simulation exercise on the offsite management node and the offsite exercise database cluster.

14. The method of claim 13, further comprising:
establishing, by the offsite exercise database cluster, a second connection with the local management node in a non-exercise situation.

15. The method of claim 13, further comprising:
in response to the offsite exercise database cluster establishing the first connection with the offsite management node, receiving, by the offsite exercise database cluster, backup notification information sent by the offsite management node; and
backing up, by the offsite exercise database cluster, offsite exercise database cluster data in response to the backup notification information.

16. The system of claim 15, further comprising:
receiving, by the offsite exercise database cluster, restoration notification information sent by the offsite management node after the exercise is completed; and
restoring, by the offsite exercise database cluster, the backed up offsite exercise database cluster data in response to the restoration notification information.

17. The system of claim 13, further comprising:
receiving, by the offsite exercise database cluster, a consistency rollback instruction sent by the offsite management node; and
executing, by databases of the offsite exercise database cluster, a rollback operation in response to the consistency rollback instruction.

18. A device, comprising:
a memory configured to store a program; and
a processor configured to execute the program stored in the memory, wherein when the processor executes the program stored in the memory, the processor is configured to execute:
the method of any one of claims 6 to 12; or
the method of any one of claims 13 to 17.

19. A computer-readable storage medium storing computer-executable instructions that are configured to execute:
the method of any one of claims 6 to 12; or
the method of any one of claims 13 to 17.
